# EUROPEAN PATENT APPLICATION

(11) **EP 4 197 744 A1**
(43) Date of publication of application: **21.06.2023**
(21) Application number: 21020637.1
(22) Date of filing: 14.12.2021
(51) Int. Cl.: B29C 64/153, B29C 64/371, B29C 64/25, B22F 10/64, B22F 12/20, B33Y 10/00, B33Y 30/00, B33Y 40/00, B33Y 40/20, B29C 71/02

(54) **METHOD FOR A FAST COOLING OF POLYMER (PLASTIC) PARTS FOLLOWING 3D PRINTING PROCESS**

(71) Applicant: Linde GmbH, 82049 Pullach (DE)
(72) Inventor: Foret, Pierre, 82049 Pullach (DE); Cheikh, Amal rouhou, 82049 Pullach (DE)
(74) Representative: Gellner, Bernd

(57) **Abstract**

The present invention relates to a method of cooling a component produced by an additive manufacturing (AM) process. In particular, the method relates to providing the component in a container (34) within a build chamber of an additive manufacturing device; transferring the container from the build chamber into an external heating chamber (30), wherein the external heating chamber is preheated to a predetermined temperature; gradually changing the predetermined temperature inside the external heating chamber including a fast cooling period and a slow cooling period. The method further comprises injecting an inert gas (44) into the external heating chamber during changing the temperature inside the external heating chamber.

## Description

The present invention relates to a method and an apparatus for fast cooling components produced by additive manufacturing (AM), particularly, but not exclusively, parts made by polymer selective laser sintering (SLS).

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (SLM) is a particular rapid prototyping, 3D printing, or Additive Manufacturing (AM) technique designed to use a high power-density laser to melt and fuse metallic powders together. In many applications, SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels of around 1000 parts per million, although lower levels such as 500 parts per million or less may be required under certain circumstances. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted.

Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in the final microstructure compared to SLM due to the very different thermal history compared to materials processed by EBM.

The powder feedstock is typically pre-alloyed, as opposed to a mixture. That aspect allows classification of EBM with selective laser melting (SLM), where competing technologies like SLS and DMLS require thermal treatment after fabrication. Compared to SLM and DMLS, EBM has a generally superior build rate because of its higher energy density and scanning method.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder, whereas SLS or SLM can also be used with non-metals. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

In general additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam or electron beam, an arc, or other plasma-based heat sources.

All the techniques for additive manufacturing discussed above provide the possibility for producing parts of very complex geometries, including but not limited to hollow features such as channels and 3D honeycomb (or any other mesh type) structures.

During the SLS manufacturing process, the manufactured part has to be cooled down inside a manufacturing apparatus from the working temperature to the room temperature by means of a heater controller. Slow cooling is required to avoid undesired crystallization and/or phase transformation of the polymeric material used to manufacture the part. However, such a process is very time consuming, and the total machine time for manufacturing a single part can reach an extra 30-35 hours when the step of cooling is accounted for. This leads to undesired delays in manufacturing the next part, and in turn, to negative effects on the production line, i.e. inability to perform continuous printing of the parts.

It is therefore an object of the present invention to provide a method and a device for producing a component by additive manufacture that at least partially mitigates the problems described above.

One or more of these problems are solved by a method according to independent claims 1 and 11. Advantageous embodiments are defined in the sub-claims.

According to an aspect of the present invention a method of cooling a component produced by an additive manufacturing (AM) process is provided, said method comprising:
- providing the component in a container within a build chamber of an additive manufacturing device;
- transferring the container from the build chamber into an external heating chamber, wherein the external heating chamber is preheated to a predetermined temperature;
- gradually changing the temperature inside the external heating chamber, and wherein the method further comprises injecting an inert gas into the external heating chamber during changing the temperature inside the external heating chamber.

Using an external heating chamber allows control of the cooling process of the manufactured component, while the part is being cooled down in the same inert atmosphere of gas as it was built. Cooling down the part externally starting at the same conditions as manufacturing avoids distortion of the part as it would normally happen using natural cooling or cooling with air. Furthermore, by using the external heating chamber the additive manufacturing device can be used for producing the next part, thus increasing the device's productivity by freeing up time and improving the economic cost of the process.

In an embodiment, the method further comprises detecting a temperature of the component by means of a sensor. In another embodiment, the sensor is any one of a thermocouple, a thermal camera or an IR sensor. In another embodiment, the temperature control system is a closed loop temperature control system, wherein the closed loop temperature control system measures the temperature of the component and controls the temperature of the external heating chamber. Advantageously, it allows for precise control of the temperature conditions inside the external heating chamber.

In another embodiment, the additive manufacturing process is a selective laser sintering method.

In yet another embodiment, the component is made of any one of polyamide, polyetheretherketone, polypropylene, thermoplastic elastomer, or a mixture thereof. Advantageously, by using an array of polymers, it is possible to manufacture various parts with the required physico-chemical characteristics, such as water solubility, hardness, density etc.

In another embodiment, gradually changing the predetermined temperature comprises changing the temperature incrementally in 5-20°C increments. In yet another embodiment, gradually changing the predetermined temperature comprises changing the temperature incrementally in 10°C increments. Advantageously, by changing the temperature in increments allows better control of the final properties of the manufactured part.

In an embodiment, the inert gas is any one of nitrogen, argon, carbon dioxide, carbon monoxide, helium, or a mixture thereof. Advantageously, by using various gases it is possible to create an optimal inert atmosphere with the most suitable characteristics that are tailored to the material that is used to manufacture the part.

In another embodiment, the predetermined temperature is between 150 and 250°C. Advantageously, by having a range of predetermined temperatures between 150 and 250°C it is possible to cool down the parts made of various polymers that require different processing parameters that will, in turn, affect the heating of the final manufactured part and its resultant temperature after the manufacturing process is completed.

Advantageously, the gradual change in temperature includes a fast cooling period and a slow cooling period.

According to another aspect of the invention, an apparatus for cooling a component produced using an AM process is provided, said apparatus comprising:
- a heating chamber configured to receive a container comprising the component, said heating chamber comprising:
- at least one opening configured to receive at least one conduit, wherein said at least one conduit provides an inert gas into the heating chamber; and
- at least one opening configured to receive at least one sensor, wherein said at least one sensor is configured to measure a temperature of the component;
- a controller, wherein the controller is arranged to:
- pre-heat the heating chamber to a predetermined temperature; and
- control a cooling rate of the heating chamber.

According to another aspect of the invention, a system for producing a component using an AM process is provided, said system comprising:
- a manufacturing space;
- a heat source;
- a source of a feedstock material;
- a source of a process gas; and
- a cooling apparatus as described herein before.

The invention is explained below with the aid of an embodiment shown in the drawings. The drawings show in:
- Figure 1: a schematic view of an apparatus for powder bed additive manufacturing by Selective Laser sintering (SLS)
- Figure 2: a schematic view of an apparatus for cooling a component produced by the SLS process.

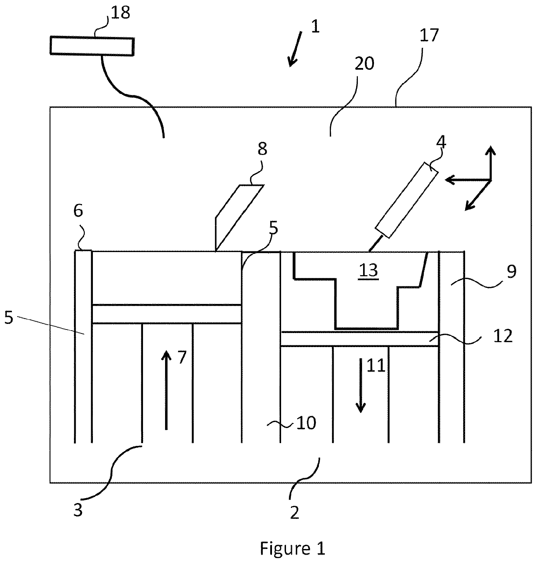

Figure 1 shows an apparatus for additive manufacturing 1 according to an embodiment of the present invention. It is clear that the present invention is applicable for all methods and devices for additive manufacturing disclosed in this description.

The apparatus 1 comprises a production cylinder 2, a delivery cylinder 3 and a heat source 4.

The heat source 4 according to a preferred embodiment comprises a laser beam and a corresponding scanner system for melting metal powder (not shown). However, other heat sources, such as an electron beam in combination with a scanning system, are also possible.

The delivery cylinder 3 comprises a housing 5 with a wall 6 wherein a powder delivery piston 7 is disposed inside the housing 5.

A powder applying device 8, for example a roller, is provided for pushing a metal or polymer powder from the delivery cylinder 3 to the production cylinder 2.

The production cylinder 3 comprises a housing 9 with a wall 10.

A lift table 11 with a build platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a build space 13.

The build space 13 houses the fabrication powder bed and therefore the object being fabricated.

The build platform 12 can be an integral part of the lift table 11 of the fabrication piston or a separate part connected to the lift table 11.

Furthermore, a processing chamber 17 is provided surrounding the production cylinder 2, the delivery cylinder 3 and the heat source 4.

The manufacturing space 20 according to the present invention is therefore the build space 13 of the production cylinder 2 defined by the 10 wall of the housing 9 of the production cylinder 2 and the lift table 11 with the build platform 12 disposed inside the wall 10 of the housing 9, and/or the manufacturing space is the room within the processing chamber 17.

The apparatus 1 may be used to produce parts by Selective Laser Sintering (SLS) in the conventional way. Briefly, at the start of the process, the manufacturing space 20 can be heated up to a temperature of around 360°C. The protective gas can be pumped into the manufacturing space 20 and kept at elevated temperature for at least 2 hours to provide uniform heating of all the elements of the manufacturing apparatus 1 in order to avoid their thermal deformation during operation. The laser 4 may be controlled to heat the platform 12 with a first layer of powder (having a thickness in the range of 120 µm) to a predetermined temperature at which the process is to take place. This temperature must be below the melting point of the powder, but is high enough to cause weak sintering of the powder. For example, the predetermined temperature may be as high as 1000°C or more. The scanner system then controls the laser 4 to further heat selected portions of the first layer of powder so as to melt these portions. A further layer of powder is then applied on top of the powder bed, and the laser 4 is then controlled to first heat the further layer of powder to the predetermined temperature, and then to further heat selected regions so as to melt the selected regions. The process is repeated until all of the parts of the component that are required to be fused have been melted by the laser 4. At this point, formation of the part is complete. After completion of the manufacturing of the part, the part is cooled down slowly together with the volume of unsintered powder. As a final step, the part and the surrounding unsintered power are removed from the machine and moved to a cleaning station where the part is cleaned from the unsintered powder.

Optionally, the melting process occurs in a gaseous atmosphere under "controlled vacuum" conditions. For example, the process may take place in a Nitrogen atmosphere at a pressure that is preferably in the range of 1×10⁻³ mbar and 5×10⁻³ mbar. However, other vacuum ranges are also anticipated. Also, other inert gases can be used, for example Helium, Argon, carbon dioxide, carbon monoxide, or mixtures thereof.

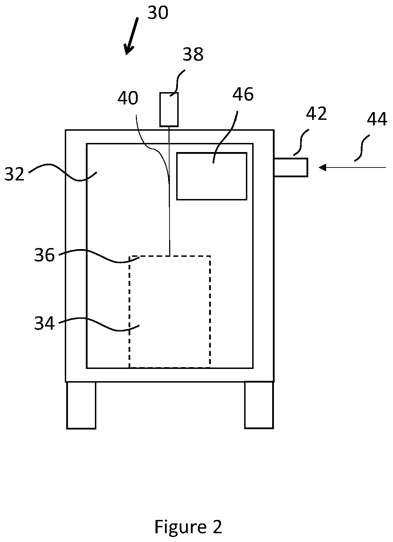

Figure 2 shows a schematic representation of a cooling system according to the embodiment of the present invention.

An external heating chamber 30 comprises an enclosed space 32 that is configured to accommodate the manufactured part together with the unsintered powder. It will be understood that the manufactured part along with the unsintered powder is provided inside the enclosed space 32 in a container 34. The container 34 comprises four side walls and a bottom wall, and a lid 36. The lid 36 can be used for allowing easy access to the core of the manufactured part to measure the temperature of the part during and after cooling. The lid 36 may also have an opening to insert a sensor.

The external heating chamber 30 further comprises a sensor inlet 38 configured to allow a sensor 40 to be inserted into the enclosed space 32 without disturbing the airtight atmosphere inside the space 32. The sensor 40 can be a temperature sensor. As will be understood by the skilled person, the sensor can be any of an IR sensor, a thermocouple, thermistor, semiconductor-based sensor, or the like. Depending on the type of sensor used, the sensor 40 can be located on the surface of the manufactured part or in the vicinity of the core of the manufactured part.

The external chamber 30 further comprises a gas inlet 42. The gas inlet 42 is configured to receive a conduit (not shown) that will direct the flow of inert gas 44 into the enclosed space 32. The inert gas supplied into the enclosed space is of the same nature that the one used to manufacture the part as described above. It is understood that the inert gas can be nitrogen, argon, helium, carbon dioxide, carbon monoxide, or mixtures thereof.

The external chamber further comprises a controller 46 that is configured to control the cooling rate depending on the measurements provided by the sensor 40. A separate controller of the dedicated gas supply system is configured to control the rate of supplying of the inert gas in the enclosed space 32 of the external heating chamber 30.

It will be understood that the controller is further configured to heat the enclosed space 32 of the heating chamber 30 to a predetermined temperature. This is done with the aim to provide the conditions that are equivalent to those inside of the manufacturing device 1 at the end of the manufacturing process. The predetermined temperature may be in the range of 150 and 250°C, depending on the type of material to be used as a feedstock material.

The feedstock material used in the manufacturing process can be any of the following: polyamide, polyetheretherketone, polypropylene, thermoplastic elastomer, or a mixture thereof. The choice of the feedstock material depends on the desired properties of the manufactured part, as well as on the field of application of the manufactured part. For example, but without limitation, the parts can be used in the medical devices sector, aerospace or automotive industry, or other fields where polymeric parts manufactured with high precision are required.

The controller 46 controls the cooling of the manufactured part in the way described herein below.

As a first step, as discussed above, the controller pre-heats the enclosed space to the predetermined temperature inside the heating device to provide a pre-heated atmosphere for the container 34 with a part to be transferred.

As the next step, after the container 34 with the manufactured part has been transferred from the manufacturing apparatus 1 into the external heating chamber 30, the controller controls the supply of the inert gas to make sure an inert atmosphere is provided, to avoid unwanted oxidation of the surface of the part. It will be understood that this step will be performed for the whole duration of the cooling process. In the other words, the controller controls injection of the inert gas into the enclosed space 32 during the steps of changing temperature described below.

As mentioned above, the controller initiates the step of slow cooling. This step decreases the temperatures from the predetermined temperature in 5-20°C increments, more preferably in 10°C increments. In an embodiment, the predetermined temperature can be 180°C. In an exemplary embodiment, the slow cooling step can terminate at the temperature of 120°C, for example. The rate of cooling depends on the material, so it will be clear to the skilled person that the time for the temperature to decrease by every 10°C will therefore be variable and dependent on the properties of the material to be cooled.

As the next step, the controller initiates the second step of fast cooling that, in an exemplary embodiment, can be from 120°C to room temperature. It will be understood that "fast cooling" here means a free-fall uncontrolled cooling. For example, it can be between 10 and 100°C/hour. It will be understood that the process will not stop until the temperature of the core of the part becomes less than the glass transition (GT) temperature. This is important as the part or its properties can deteriorate due to uncontrolled crystallization if the temperature below the GT is not reached. Furthermore, it is understood that the controller is configured to provide fast cooling by means of fan forced mechanical cooling.

As a final step, once the desired temperature (below the GT temperature) is reached, the controller initiates purging the enclosed space to replace the inert atmosphere with the air at room temperature and the process of cooling the part inside the external heating chamber is finished.

Advantageously, employing the external heating chamber allows to cool down the manufactured part externally and under the controlled conditions corresponding to those inside the manufacturing apparatus 1, thus avoiding the cooling stage occurring inside the apparatus and therefore freeing the manufacturing apparatus 1 to manufacture the next part due to skipping the prolonged cooling stage.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Reference signs

- 1: device
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: built platform
- 13: build space
- 17: processing chamber
- 20: manufacturing space
- 30: external heating chamber
- 32: enclosed space
- 34: container
- 36: lid
- 38: sensor inlet
- 40: sensor
- 42: gas inlet
- 44: flow of inert gas
- 46: controller

## Claims

1. A method of cooling a component produced by an additive manufacturing (AM) process, said method comprising:
- providing the component in a container within a build chamber of an additive manufacturing device;
- transferring the container from the build chamber into an external heating chamber (30), wherein the external heating chamber (30) is preheated to a predetermined temperature;
- gradually changing the temperature inside the external heating chamber (30), and
wherein the method further comprises injecting an inert gas into the external heating chamber (30) during changing the temperature inside the external heating chamber (30).

2. The method of claim 1,, wherein the gradual change of the temperature includes a fast cooling period and a slow cooling period.

3. The method of claim 1 or 2, further comprising detecting a temperature of the component by means of a sensor (40).

4. The method of claim 3, wherein the sensor (40) is any one of a thermocouple, a thermal camera or an IR sensor.

5. The method of claim 3 or 4, further comprising a closed loop temperature control system, wherein the closed loop temperature control comprises measuring the temperature of the component and controlling the temperature of the external heating chamber (30).

6. The method of any of claims 1 to 5, wherein the additive manufacturing process is a selective laser sintering method.

7. The method of any of claims 1 to 6, wherein the component is made of any one of polyamide, polyetheretherketone, polypropylene, thermoplastic elastomer, or a mixture thereof.

8. The method of any of claims 1 to 7, wherein gradually changing the temperature comprises changing the temperature incrementally in 5-20°C, preferably in 10-20°C increments.

9. The method of any of claims 1 to 8, wherein the inert gas is any one of nitrogen, argon, carbon dioxide, carbon monoxide, helium or a mixture thereof.

10. The method of any of claims 1 to 9, wherein the predetermined temperature is between 150 and 250°C.

11. An apparatus for cooling a component produced using an AM process, said apparatus comprising:
- a heating chamber (30) configured to receive a container comprising the component, said heating chamber comprising:
- at least one opening configured to receive at least one conduit, wherein said at least one conduit provides an inert gas into the heating chamber; and
- at least one opening configured to receive at least one sensor (40), wherein said at least one sensor is configured to measure a temperature of the component;
- a controller, wherein the controller is arranged to:
- pre-heat the heating chamber to a predetermined temperature; and
- control a cooling rate of the heating chamber.

12. A system for producing a component using an AM process, said system comprising:
- a manufacturing space (20);
- a heat source (4);
- a source of a feedstock material;
- a source of a process gas; and
- a cooling apparatus as claimed in claim 11.
